# EUROPEAN PATENT SPECIFICATION

(11) **EP 2 439 702 B1**
(45) Date of publication and mention of the grant of the patent: **06.12.2017**
(21) Application number: 10186532.7
(22) Date of filing: 05.10.2010
(51) Int. Cl.: G07B 15/06, G06K 19/07, H04B 1/48, H04B 5/00

(54) **A single-antenna vehicle transponder**
Einzelantennen-Fahrzeugtransponder
Transpondeur de véhicule à antenne unique

(43) Date of publication of application: 11.04.2012
(73) Proprietor: Kapsch TrafficCom AB, 551 10 Jönköping (SE)
(72) Inventor: Johannesson, Kjell-Åke, 444 32 Stenungssund (SE); Rogö, Johan, 566 35 Habo (SE)
(74) Representative: Sandstedt, Jonas Sven James

(56) References cited:
- WO-A2-2005/052847
- GB-A- 2 352 931
- JP-A- 2010 140 375
- US-A- 5 305 469
- US-B1- 6 838 989

## Description

### TECHNICAL FIELD

The present invention relates to a vehicle transponder comprising an antenna and a power directing means, the power directing means having a first port, a second port and a third port. The power directing means is arranged to direct power from the first port to the second port and/or the third port. The transponder further comprises a modulator which comprises a first port, a second port and a third port, where the second port of the power directing means is connected to the first port of the modulator. In a first mode of operation, a received signal at the antenna is directed to the modulator via the power directing means, where further the modulator is arranged to modulate the received signal by means of phase shifting.

### BACKGROUND ART

At some places there is a demand for controlling the flow of vehicles, and one way to perform such a control is to use electronic fee collection systems, where vehicles passing a road side station are debited a certain fee, where the fee may vary, by way of example for different types of vehicles and for different times.

Normally, each road side station is equipped to communicate to vehicle transponders, which are positioned in the vehicles. Each transponder is normally arranged to receive a signal from the toll station and to respond, where the response for example comprises vehicle identification data. In many cases, two different antennas are used; one for reception and one for transmission.

As an alternative, many transponders are of a single antenna type, using only one antenna for both transmission and reception. Such a transponder normally only utilizes passive amplification of the reflected signal, i.e. by means of the antenna gain, where for example a switch may be arranged to switch between transmission and reception of the radio unit.
When the transponder is in transmitting mode, the single antenna receives an unmodulated carrier signal that is modulated in a previously known way, for example by means of Binary Phase Shift Keying (BPSK) and transmitted by means of so-called passive re-transmission. In a typical BPSK circuit of this kind, the received signal is reflected in one of two phase states, the phase states being altered such that a reflected signal comprising information in the form of the varying phase states is created.
The phase states ideally differ 180°, and this is normally accomplished by switching between a first open conductor and a second open conductor where a received signal is reflected at the open ends, and where the second conductor has an electrical length that exceeds the electrical length of the first conductor with 90°. Since a received signal runs along the first and second conductors both ways, to and from the open ends, 180° is added to signal that is reflected via the second conductor compared to a signal that is reflected via the first conductor.

However, such an arrangement only allows for an increased transmitted signal level to be obtained by using an antenna with higher gain, which in turn means an antenna with a narrow radiation lobe. An antenna with a narrow radiation lobe results in a narrow communication zone, and this may not be desired in order to obtain a secure communication.
There is thus a need for a vehicle transponder where a transmitted signal level is obtained without the disadvantage of a narrow communication zone according to the above. Document US 5 305 469 A and Document US 6 838 989 B1 disclose vehicle transponders. Another relevant document is GB 2 352 931 A which discloses a piezoelectric tag.

### SUMMARY OF THE INVENTION

The object of the present invention is to provide a single antenna vehicle transponder where a transmitted signal level is obtained without the disadvantage of a narrow communication zone.
This object is achieved by means of a vehicle transponder comprising an antenna and a power directing means, the power directing means having a first port, a second port and a third port. The power directing means is arranged to direct power from the first port to the second port and/or the third port. The transponder further comprises a modulator which comprises a first port, a second port and a third port, where the second port of the power directing means is connected to the first port of the modulator. In a first mode of operation, a received signal at the antenna is directed to the modulator via the power directing means, where further the modulator is arranged to modulate the received signal by means of phase shifting. The modulator has a reciprocal path that runs from the first port to the second port and back to the first port, and the second port of the modulator is connected to an active amplifying means that is arranged to amplify and reflect the modulated signal through said reciprocal path to be transmitted via the antenna. The third port of the power directing means is connected to a demodulator, where, in a second mode of operation, a received signal is directed to the demodulator via the power directing means. According to an example, the active amplifying means is in the form of a negative resistance amplifier.

According to another example, the power directing means is in the form of a first switch, where, during the first mode of operation, the first switch is arranged to connect the first port of the first switch to the second port of the first switch.

Alternatively, the power directing means is in the form of a power dividing means, where, during the first mode of operation, the power dividing means is arranged to connect the first port of the power dividing means to the second port of the power dividing means.

Other examples are evident from the dependent claims.
A number of advantages are obtained by means of the present invention. For example:
- integration of the antenna on a printed circuit board in the transponder is simplified;
- a wider communication zone is possible since antennas with lower gain may be used; and
- antenna requirements regarding antenna directivity may be less strict.

### BRIEF DESCRIPTION OF THE DRAWINGS

The present invention will now be described more in detail with reference to the appended drawings, where:
- Figure 1: schematically shows a vehicle and a road side station;
- Figure 2: shows simplified schematics for a vehicle transponder according to a first example of the present invention;
- Figure 3: shows simplified schematics for a vehicle transponder according to a second example of the present invention; and
- Figure 4: shows simplified schematics for a vehicle transponder according to a third example of the present invention.

### DETAILED DESCRIPTION

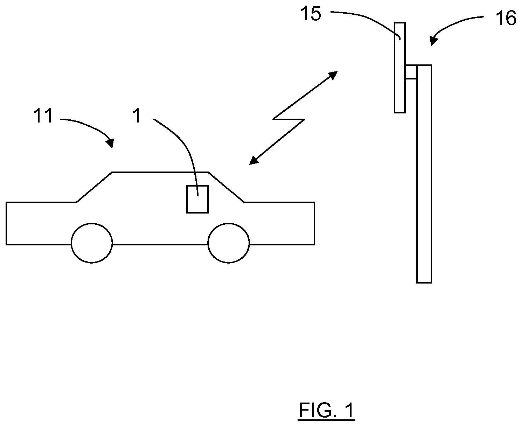

With reference to Figure 1, a vehicle 11 that passes a road side station 16 is arranged to communicate with the road side station 16 by means of an on-board unit in the form of a vehicle transponder 1. The communication is performed in order to execute information exchange between the road side station and the transponder, where the information exchange is used for debiting the vehicle a certain road toll fee. Such a debiting may be performed in many ways, and these details will not be discussed here, since they are well-known.

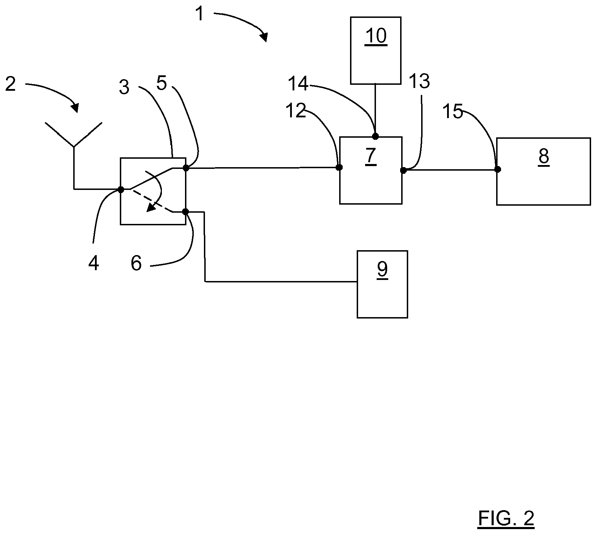

With reference to Figure 2, showing a first example, the vehicle transponder 1 comprises an antenna 2 and a switch 3, where the switch 3 comprises a first port 4, a second port 5 and a third port 6. The switch 3 is arranged to switch from the first port 4 to either the second port 5 or the third port 6.

Furthermore, the transponder comprises a modulator 7, the modulator 7 comprising a first port 12, a second port 13 and a third port 14, where the second port 5 of the switch is connected to the first port 12 of the modulator 7. In a first mode of operation, corresponding to transmission, a received unmodulated continuous wave (CW) signal at the antenna 2 is directed to the modulator 7 via the switch 3, where further the modulator 7 is arranged to modulate the received signal by means of phase shifting.

The modulator 7 has a reciprocal path that runs from the first port 12 to the second port 13 and back from the second port 13 to the first port 12. The modulator comprises means for altering the phase of a signal that runs through this reciprocal path, such that the electrical length between the first port 12 and the second port 13 is altered between a first state and a second state. The phase difference between the first state and the second state is 90°, enabling a signal that has run through the reciprocal path between the first port 12 and the second port 13 to have two phase states which differ 180°, which corresponds to Binary Phase Shift Keying (BPSK) modulation.

The third port 14 of the modulator 7 is connected to a control unit 10 that is arranged to control the modulator 7. The control unit 10, using information regarding the signal that is to be transmitted from the vehicle transponder 1, thus switches the modulator 7 between the two phase states described above. By means of this switching the phase states are altered such that a reflected signal comprising information in the form of the varying phase states is created, using the initially received unmodulated CW signal.

This type of modulator is well-known for the person skilled in the art.

According to the present invention, second port 13 of the modulator 7 is connected to an active amplifying means 8 that is arranged to amplify and reflect the modulated signal to be transmitted via the antenna 2. The active amplifying means 8 is in this example in the form of a of a negative resistance amplifier.

The transponder further comprises a detector 9 such that, in a second mode of operation, when the switch 3 connects the first port 4 with the third port 6, the detector 9 is arranged to detect a received modulated signal that comprises information.

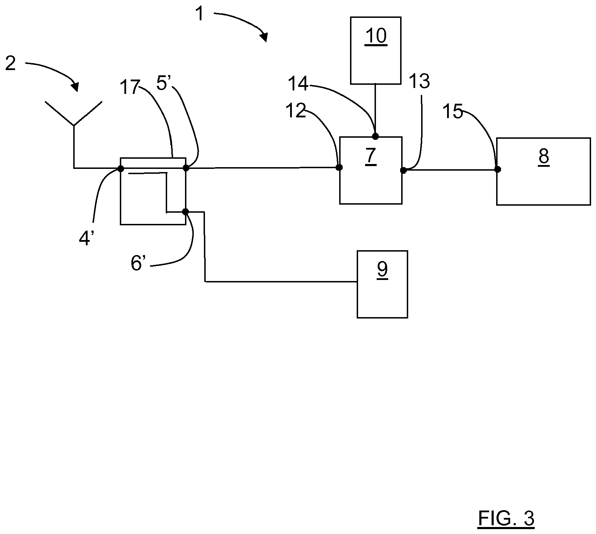

In a second example, with reference to Figure 3, a directional coupler 17 is used instead of the first switch. The directional coupler 17 comprises a first port 4', a second port 5' and a third port 6', where these ports 4', 5', 6' correspond to the ports 4, 5, 6 of the first switch 3 in the first example.

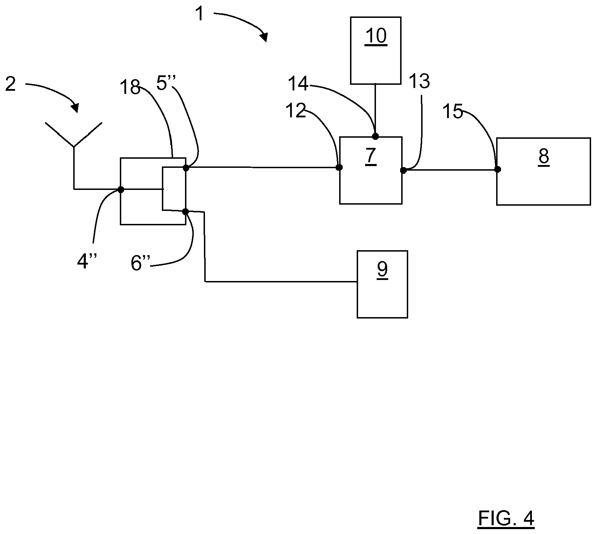

In a third example, with reference to Figure 4, a power divider 18 is used instead of the first switch. The power divider 18 comprises a first port 4", a second port 5" and a third port 6", where these ports 4", 5", 6" correspond to the ports 4, 5, 6 of the first switch 3 in the first example.

In the second and third example, the first port 4', 4" is always connected to both the second port 5', 5" and the third port 6", 6", but with a certain degree of connection that depends on the coupling factor at the directional coupler 17 and the power division properties of the power divider 18.

Generally, the directional coupler 17 and the power divider 18 may be regarded as power dividing means 17, 18.

Then, as an example of the first mode of operation, the power dividing means 17, 18 is arranged to connect the first port 4', 4" of the power dividing means 17, 18 to the second port 5', 5" of the power dividing means 17, 18, where a part of a reflected signal that is fed from the modulator 7 to the antenna 2 is fed from the second port 5', 5" of the power dividing means 17, 18 to the third port 6', 6" of the power dividing means 17, 18 and further fed to the detector 9. This transmitted power that leaks from the first port 4', 4" to the third port 6', 6" may either be disregarded or used as a measure of transmitted signal strength by means, this being measured by appropriate means at the detector.

Generally, for all the examples, the first switch 3, the directional coupler 17, the power divider 18 and similar devices which are possible to use at their position enabling the antenna 2 to be connected to the modulator 7 and/ or the detector 9 may be regarded as a power directing means 3, 17, 18. The degree of signal that is directed from the second port 5, 5', 5" to the third port 6, 6', 6" is dependent on the connection properties between said second port 5, 5', 5" and third port 6, 6', 6".

The core of the present invention is to introduce active reflective amplification of a retransmitted signal. Hence, the same antenna can be used for both receiving the incident power, and retransmit the amplified and modulated uplink signals, reducing the need for two antennas in the uplink chain. The invention makes possible a considerable reduction of the size of the circuit board or circuit boards in the transponder.

The present invention is not limited to the embodiments shown above, but may vary freely within the scope of the dependent claims. For example, other types of modulation may be used, for example Quadrature Phase Shift Keying (QPSK), where the modulator thus is arranged for altering the phase between the first port 12 and the second port 13 between four different phase states.

The negative resistance amplifier 8 is only an example of an appropriate active amplifying means, other types of active amplifying means are also conceivable.

The control unit 10 may also be arranged to control the power directing means 3, 17, 18; alternatively a separate control unit (not shown) is arranged for controlling the power directing means 3, 17, 18.

The modulator 7 may be made in many different ways, for example as a controllable branch-line coupler.

The detector 9 may be any suitable type of detector, for example an envelope detector for detecting amplitude modulated signals.

The transponder may be used for any kind of communication between a road side station and a vehicle, not only communication related to fee collection, thus not only being constituted by a vehicle toll transponder, but generally by any type of vehicle transponder.

## Claims

1. A vehicle transponder (1) comprising an antenna (2) and a power directing means (3, 17, 18), the power directing means (3, 17, 18) having a first port (4, 4', 4"), a second port (5, 5', 5") and a third port (6, 6', 6"), where the power directing means (3, 17, 18) is arranged to direct power from the first port (4, 4', 4") to the second port (5, 5', 5") and/or the third port (6, 6', 6"), where the transponder further comprises a modulator (7), the modulator comprising a first port (12), a second port (13) and a third port (14), where the second port (5, 5', 5") of the power directing means (3, 17, 18) is connected to the first port (12) of the modulator (7), and where, in a first mode of operation, a received signal at the antenna (2) is directed to the modulator (7) via the power directing means (3, 17, 18), where further the modulator (7) is arranged to modulate the received signal by means of phase shifting, wherein the modulator has a reciprocal path that runs from the first port (12) to the second port (13) and back from the second port (13) to the first port (12), and the second port (13) of the modulator (7) is connected to an active amplifying means (8) that is arranged to amplify and reflect the modulated signal through said reciprocal path to be transmitted via the antenna (2), **characterized in that** the third port (6) of the power directing means (3, 17, 18) is connected to a demodulator (9), where, in a second mode of operation, a received signal is directed to the demodulator (9) via the power directing means (3, 17, 18).

2. A vehicle transponder according to claim 1, **characterized in that** the power directing means (3, 17, 18) is in the form of a first switch (3), where, during the first mode of operation, the first switch (3) is arranged to connect the first port (4) of the first switch (3) to the second port (5) of the first switch (3).

3. A vehicle transponder (1) according to claim 1, **characterized in that** the power directing means (3, 17, 18) is in the form of a power dividing means (17, 18), where, during the first mode of operation, the power dividing means (17, 18) is arranged to connect the first port (4', 4") of the power dividing means (17, 18) to the second port (5', 5") of the power dividing means (17, 18).

4. A vehicle transponder (1) according to any one of the previous claims, **characterized in that** the active amplifying means (8) is in the form of a negative resistance amplifier.

5. A vehicle transponder (1) according to any one of the preceding claims, **characterized in that** the transponder (1) further comprises a control unit (10) that is arranged to control the modulator (7).

## Patentansprüche

1. Fahrzeugtransponder (1) umfassend eine Antenne (2) und ein leistungsführendes Mittel (3, 17, 18), wobei das leistungsführende Mittel (3, 17, 18) einen ersten Eingang (4, 4', 4"), einen zweiten Eingang (5, 5', 5") und einen dritten Eingang (6, 6', 6") aufweist, wobei das leistungsführende Mittel (3, 17, 18) dazu ausgelegt ist, eine Leistung von dem ersten Eingang (4, 4', 4") zu dem zweiten Eingang (5, 5', 5") und/oder zu dem dritten Eingang (6, 6', 6") zu führen, wobei der Transponder ferner einen Modulator (7) umfasst, wobei der Modulator einen ersten Eingang (12), einen zweiten Eingang (13) und einen dritten Eingang (14) umfasst, wobei der zweite Eingang (5, 5', 5") des leistungsführenden Mittels (3, 17, 18) mit dem ersten Eingang (12) des Modulators (7) verbunden ist, und wobei, in einer ersten Betriebsart, ein bei der Antenne (2) empfangenes Signal über das leistungsführende Mittel (3, 17, 18) zu dem Modulator (7) geführt wird, wobei der Modulator (7) ferner zum Modulieren des empfangenen Signals über Phasenverschiebung ausgelegt ist, wobei der Modulator einen gegenseitigen Weg aufweist, der von dem ersten Eingang (12) zum zweiten Eingang (13) und zurück von dem zweiten Eingang (13) zum ersten Eingang (12) verläuft, und der zweite Eingang (13) des Modulators (7) mit einem aktiven Verstärkungsmittel (8) verbunden ist, der dazu ausgelegt ist, das modulierte Signal über den gegenseitigen Weg zu verstärken und zu reflektieren, um über die Antenne (2) übertragen zu werden, **dadurch gekennzeichnet, dass** der dritte Eingang (6) des leistungsführenden Mittels (3, 17, 18) mit einem Demodulator (9) verbunden ist, wobei, in einer zweiten Betriebsart, ein empfangenes Signal zu dem Demodulator (9) über das leistungsführende Mittel (3, 17, 18) geführt wird.

2. Fahrzeugtransponder nach Anspruch 1, **dadurch gekennzeichnet, dass** das leistungsführende Mittel (3, 17, 18) in Form eines ersten Schalters (3) vorliegt, wobei, in der ersten Betriebsart, der erste Schalter (3) dazu ausgelegt ist, den ersten Eingang (4) des ersten Schalters (3) mit dem zweiten Eingang (5) des ersten Schalters (3) zu verbinden.

3. Fahrzeugtransponder (1) nach Anspruch 1, **dadurch gekennzeichnet, dass** das leistungsführende Mittel (3, 17, 18) in Form eines Leistungsteilungsmittels (17, 18) vorliegt, wobei, in der ersten Betriebsart, das Leistungsteilungsmittel (17, 18) dazu ausgelegt ist, den ersten Eingang (4', 4") des Leistungsteilungsmittels (17, 18) mit dem zweiten Eingang (5', 5") des Leistungsteilungsmittels (17, 18) zu verbinden.

4. Fahrzeugtransponder (1) nach einem der vorgehenden Ansprüche, **dadurch gekennzeichnet, dass** das aktive Verstärkungsmittel (8) in Form eines Verstärkers mit negativem Widerstand vorliegt.

5. Fahrzeugtransponder (1) nach einem der vorgehenden Ansprüche, **dadurch gekennzeichnet, dass** der Transponder (1) ferner eine Steuereinheit umfasst (10), die zum Steuern des Modulators (7) ausgelegt ist.

## Revendications

1. Transpondeur de véhicule (1) comprenant une antenne (2) et un moyen de guidage d'énergie (3, 17, 18), ledit moyen de guidage d'énergie (3, 17, 18) présentant un premier orifice (4, 4', 4"), un deuxième orifice (5, 5', 5") et un troisième orifice (6, 6', 6"), dans lequel le moyen de guidage d'énergie (3, 17, 18) est agencé pour guider de l'énergie à partir du premier orifice (4, 4', 4") au deuxième orifice (5, 5', 5") et/ou au troisième orifice (6, 6', 6"), dans lequel le transpondeur comprend en outre un modulateur (7), ledit modulateur comprenant un premier orifice (12), un deuxième orifice (13) et un troisième orifice (14), dans lequel le deuxième orifice (5, 5', 5") du moyen de guidage d'énergie (3, 17, 18) est connecté au premier orifice (12) du modulateur (7), et dans lequel dans un premier mode de fonctionnement un signal reçu à l'antenne (2) est dirigé vers le modulateur (7) via le moyen de guidage d'énergie (3, 17, 18), dans lequel en outre le modulateur (7) est agencé pour moduler le signal reçu au moyen d'un décalage de phase, dans lequel le modulateur présente un trajet réciproque s'étendant à partir du premier orifice (12) vers le deuxième orifice (13) et de retour à partir du deuxième orifice (13) vers le premier orifice (12), et le deuxième orifice (13) du modulateur (7) est connecté à un moyen amplificateur actif (8) qui est agencé pour amplifier et refléter le signal modulé par le trajet réciproque pour être transmis via l'antenne (2), **caractérisé en ce que** le troisième orifice (6) du moyen de guidage d'énergie (3, 17, 18) est connecté au démodulateur (9), où dans un deuxième mode de fonctionnement, un signal reçu est dirigé vers le démodulateur (9) via le moyen de guidage d'énergie (3, 17, 18).

2. Transpondeur de véhicule selon la revendication 1, **caractérisé en ce que** le moyen de guidage d'énergie (3, 17, 18) est dans la forme d'un premier commutateur (3), où lors du premier mode de fonctionnement, le premier commutateur (3) est agencé pour connecter le premier orifice (4) du premier commutateur (3) au deuxième orifice (5) du premier commutateur (3).

3. Transpondeur de véhicule (1) selon la revendication 1, **caractérisé en ce que** le moyen de guidage d'énergie (3, 17, 18) est dans la forme d'un moyen de division d'énergie (17, 18), où lors du premier mode de fonctionnement, le moyen de division d'énergie (17, 18) est agencé pour connecter le premier orifice (4', 4") du moyen de division d'énergie (17, 18) au deuxième orifice (5', 5") du moyen de division d'énergie (17, 18).

4. Transpondeur de véhicule (1) selon l'une quelconque des revendications précédentes, **caractérisé en ce que** le moyen amplificateur actif (8) est dans la forme d'un amplificateur de résistance négative.

5. Transpondeur de véhicule (1) selon l'une quelconque des revendications précédentes, **caractérisé en ce que** le transpondeur (1) en outre comprend une unité de commande (10) qui est agencée pour commander le modulateur (7).
